Europäisches Patentamt

European Patent Office

Office européen des brevets

(19)

(11) Veröffentlichungsnummer: **0 212 472**

**A2**

(12) **EUROPÄISCHE PATENTANMELDUNG**

(21) Anmeldenummer: 86110930.4

(51) Int. Cl.⁴: **F24J 2/08**

(22) Anmeldetag: 07.08.86

(30) Priorität: 10.08.85 DE 3528779

(43) Veröffentlichungstag der Anmeldung:
04.03.87 Patentblatt 87/10

(84) Benannte Vertragsstaaten:
AT BE CH FR GB IT LI NL SE

(71) Anmelder: **OTMATO AG**
**c/o Efficasa AG Spielhof 14A**
**CH-8750 Glarus(CH)**

(72) Erfinder: **Mauerhoff, Wolfgang**
**Limburger Strasse 15**
**D-6240 Königstein/TS(DE)**

(74) Vertreter: **Jochem, Bernd, Dipl.-Wirtsch.-Ing.**
**et al**
**Patentanwälte Beyer & Jochem Postfach 17**
**41 09**
**D-6000 Frankfurt/Main(DE)**

(54) **Mit Solarenergie betriebener Herd.**

(57) Der mit Solarenergie betriebene Herd hat wenigstens eine Kochplatte, die wärmeleitend mit einem Sonnenstrahlen-Kollektor (14) verbunden ist. Der plattenförmige Kollektor (14) ist um eine im wesentlichen horizontale Achse (16) schwenkbar und enthält eine beidseitig isolierte Platte (26) aus gut wärmeleitendem Material. Die Isolierung ist stellenweise unterbrochen, so daß vor der Platte (26) angeordnete Sammellinsen konzentrierte Sonnenstrahlen auf die Platte (26) oder wärmeleitend mit ihr verbundene Teile lenken können. Auch ein innerer Hohlraum (52) des Herds kann durch den verschwenkbaren Kollektor mit Sammellinsen beheizt werden. Der Herd ist verhältnismäßig leicht und klein, erreicht aber trotzdem vergleichsweise hohe Temperaturen.

Fig. 3

## Mit Solarenergie betriebener Herd

Die Erfindung betrifft einen mit Solarenergie betriebenen Herd mit wenigstens einer Kochplatte und einem Sonnenstrahlen-Kollektor.

Bisher wird Solarenergie in der Weise zum Kochen und Braten eingesetzt, daß sie großflächig absorbiert, in elektrische Energie umgewandelt und diese dann zum Betrieb von Elektroherden benutzt wird. In wenig erschlossenen Gebieten ist dieser Weg nicht praktikabel.

Es ist für allgemeine Zwecke auch schon bekannt, Absorberplatten mit einer vorgesetzten Linsenplatte zu kombinieren, um höhere Temperaturen zu erzielen (DE-OS 26 42 578, DE-OS 27 12 913, DE-OS 29 o7 245, CH-PS 588 667, US-PS 4 188 941). In allen Fällen wird dabei jedoch ein größeres Flüssigkeitsvolumen erhitzt, das über Rohre zu Wärmeverbrauchsstellen gepumpt wird. In dieser Kombination wäre die Linsenplatte für einen transportablen, selbständig funktionsfähigen Herd als Wärmeverbrauchsstelle praktisch nicht zu nutzen, weil alle Einheiten durch das benötigte Flüssigkeitsvolumen sehr schwer werden und außerdem eine Pumpe mit einem oft nicht zur Verfügung stehenden Antrieb erforderlich ist. Die letztgenannten Nachteile gelten auch dann, wenn in bekannter Weise die Flüssigkeit ohne Sammellinsen durch direkte Sonnenbestrahlung erhitzt wird.

Der Erfindung liegt die Aufgabe zugrunde, einen Herd der eingangs genannten Art zu schaffen, welcher klein und leicht ist, aber trotzdem hohe Temperaturen erreicht.

Vorstehende Aufgabe wird erfindungsgemäß dadurch gelöst, daß der Kollektor eine metallisch wärmeleitend mit der Kochplatte verbundene, um wenigstens eine im wesentlich horizontale Achse - schwenkbare Platte aus wärmeleitendem Material aufweist, die mit Ausnahme einzelner Stellen, wo sie mit durch Sammellinsen konzentrierten Sonnenstrahlen beaufschlagbar ist, beidseitig isoliert ist.

Bei dem neuen Herd werden mittels der Sammellinsen im Vergleich zur direkten Flächenbestrahlung wesentlich höhere Temperaturen erzielt. Das hohe Temperaturniveau kann durch die beidseitige Isolierung der wärmeleitenden Platte gehalten werden. Nur an den zur Einleitung der Wärme der konzentrierten Strahlung notwendigen kleinen Flächenbereichen muß die Isolierung der Platte bzw. eines mit ihr verbundenen wärmeleitenden Teils unterbrochen sein. Da die wärmeleitende Platte unmittelbar selbst metallisch mit der Kochplatte verbunden ist, bedarf es keines Flüssigkeitsumlaufsystems. Der Sonnenstrahlen-Kollektor kann daher zusammen mit dem Herd eine kleine, leichte und daher auch leicht zu transportierende Einheit bilden, die außer von der Sonnenenergie von sonstigen Energiequellen unabhängig ist.

Um Wärmeverluste weiter zu verringern, ist in bevorzugter Ausgestaltung der Erfindung vorgesehen, daß der freie Raum zwischen den Linsen un der wärmeleitenden Platte dicht abgeschlossen ist. Er kann mit Gas gefüllt oder auch evakuiert sein. Vorzugsweise ist er mit Ausnahme konischer Freiräume unter den Linsen mit wärmeisolierendem Material ausgefüllt.

Zur stabilen Einstellung und Fixierung der wärmeleitenden Platte in einer bestimmten Stellung entsprechend dem Sonnenstand ist in bevorzugter einfacher Ausführung der Erfindung vorgesehen, daß die Platte durch eine gegen das Gehäuse des Herds oder den Boden anzustellende Stütze in verschiedenen Schräglagen feststellbar ist.

Besondere Bedeutung kommt der Überleitung der Wärme von der Kollektorplatte auf die Kochplatte zu. In einer ersten bevorzugten praktischen Ausführungsform sind die wärmeleitende Platte und die Kochplatte über einen elastischen Materialbereich, z.B. in Form von Drahtlitzen oder einer zieharmonika förmigen Faltung, einstückig miteinander verbunden. Alternativ könnten die Kochplatte und die wärmeleitende Platte auch durch ein wärmeübertragende Gelenkverbindung miteinander verbunden sein.

Die Erfindung ist nicht auf den Betrieb einer oder mehrerer Herdplatten beschränkt, sondern die im Kollektor erzeugte hohe Temperatur kann auch zur Beheizung eines inneren Hohlraums nach Art einer Bratröhre eingesetzt werden. In bevorzugter Ausgestaltung der Erfindung kann hierzu die Kochplatte einseitig isoliert und wendbar sein, wobei sie je nach Stellung mit der nicht-isolierten oder der isolierten Seite den inneren Hohlraum begrenzt.

Die Erfindung wird nachstehend anhand der Zeichnung näher erläutert. Es zeigen:

Fig. 1 In vereinfachter perspektivischer Ansicht einen mit Solarenergie betriebenen Herd mit angelegter Kollektorplatte;

Fig. 2 einen Teilquerschnitt durch die Kollektorplatte des Herds nach Fig. 1;

Fig. 3 einen Querschnitt durch den Herd nach Fig. 1;

Fig. 4 5, 6 Vorderansicht, Draufsicht und Rückansicht des Herds nach Fig. 1.

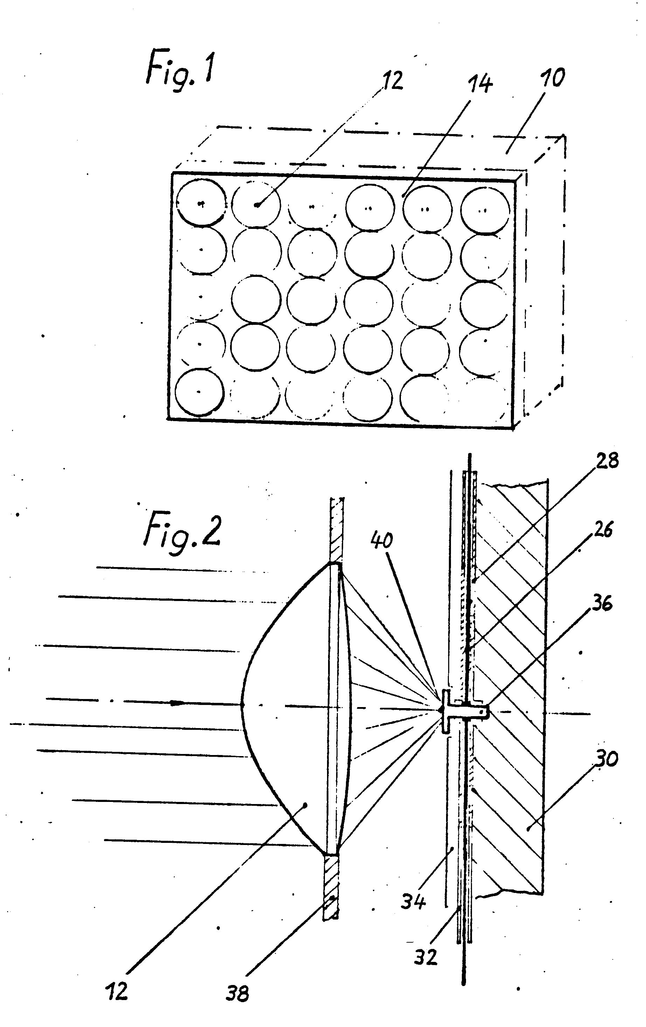

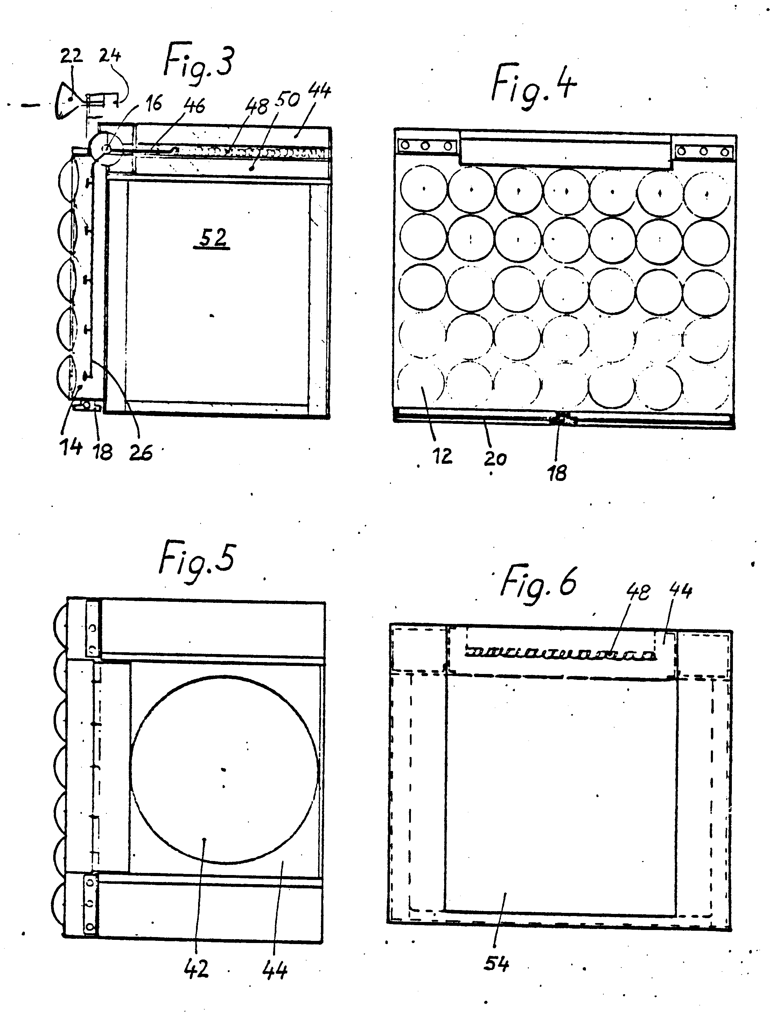

Der in der Zeichnung dargestellte Herd hat ein in Fig. 1 nur schematisch angedeutetes standfestes Gehäuse 10, an welchem eine mit mehreren Sammellinsen 12 bestückte Kollektorplatte 14 - schwenkbar gelagert ist. Die mit 16 bezeichnete Schwenkachse (siehe Fig. 3) befindet sich and der waagerechten Ober kante der Kollektorplatte 14. An ihrer Unterkante ist mittels einer Klemmhalterung 18 eine z.B. stabförmige Stütze 20 derart drehbar und verschieblich gelagert und in beliebiger Drehwinkel-und Auszugsstellung relativ zur Kollektorplatte 14 festklemmbar, daß diese um bis zu 90 Grad um die Schwenkachse 16 aufgeschwenkt und mittels der gegen den Boden angestellten Stütze 20 in beliebiger Schwenklage fixiert werden kann. In Gebrauch wird die Kollektorplatte 14 jeweils in diejenige Schwenklage gebracht, in welcher die Sonnenstrahlen etwa senkrecht darauf fallen. Um die optimale Schwenklage leicht zu finden, kann,wie in Fig. 3 angedeutet, an der Kollektorplatte 14 ein quer zu ihr gehaltener Trichter 22 mit einem dahinter fluchtend angeordneten Sensor 24 oder auch nur einer einfachen Kontrollfläche angebracht sein. Nur wenn die Kollektorplatte 14 mit ca. ± 15° senkrecht zu den Sonnenstrahlen gehalten wird, fällt Licht durch den Trichter 22 auf die Kontrollfläche 24.

Der Aufbau der Kollektorplatte 14 ergibt sich aus Fig. 2. Sie besteht im wesentlichen aus einer Metallplatte 26 aus gut wärmeleitendem Material, z.B. Kupfer. Sie ist auf der Unterseite durch zwei Isolierschichten 28, 30 vollständig abgedeckt und gegen die Außenatmosphäre wärmeisoliert. Auch die Oberseite der Platte 26 ist durch Isolierschichten 32, 34 im wesentlichen abgedeckt. Stellenweise, im Beispielsfall an Temperaturübertragungsbolzen 36, die mit der Platte 26 gut wärmeleitend verbunden, z.B. verschweißt oder verlötet sind, ist die obere Wärmeisolierung 32, 34 jedoch unterbrochen. An diesen Stellen wird die Solarenergie in die Kollektorplatte 26 eingeleitet.

Um einerseits den nicht wärmeisolierten Teil 36 der Platte 26 möglichst klein zu halten, andererseits die auf die Fläche der Kollektorplatte 26 auftreffende Solarenergie mit möglichst hoher Temperatur in den Herd einzuspeisen, sind vor der Platte 26 die Sammellinsen 12 angeordnet. Sie werden im Beispielsfall durch eine Tragplatte 38 gehalten, die gleichzeitig den freien Raum zwischen der isolierten Platte 26 und den Sammellinsen 12 nach außen abschließt. Dieser Raum ist auch an den Rändern abgedichtet. Er kann zum großen Teil mit Isoliermaterial gefüllt sein, wobei lediglich der kegelförmige Strahlenweg zwischen den Linsen 12 und dem Brennpunkt 40 auf den Temperaturübertragungsbolzen 36 frei zu bleiben hat.

Es versteht sich, daß die Größe der Kollektorplatte 14, die Anzahl und Größe der daran angeordneten Linsen 12 und die Gestaltung der Platte 26 im Bereich der Brennpunkte 40 der Linsen 12 nach den Gegebenheiten und Erfordernissen des Einzelfalls gewählt werden können. Es können z.B. mehr oder weniger Linsen 12 als gezeigt verwendet werden. Aus Gründen des Gewichts und der Kosten empfiehlt es sich, die Linsen 12 aus Kunststoff herzustellen. Gegebenenfalls können sie zusammen mit der Tragplatte 28 ein einziges Formteil bilden.

Anstelle der Temperaturübertragungsbolzen 36 könnten z.B. auch unmittelbar an der wärmeübertragenden Platte 26 angeformte Noppen vorgesehen sein. In einfachster Ausführung liegen die Brennpunkte 40 an Stellen, wo die obere Isolierung 32, 34 unterbrochen ist, unmittelbar auf einer ebenen wärmeleitenden Platte 26. Statt dieser könnten auch metallische Bänder oder Drähte die Wärme von den Brennpunkten 40 zu einer oder mehreren Heizplatten 42 (Fig. 5) des Herds leiten.

Für die Überleitung der Wärme von der Kollektorplatte 14 auf die Kochplatte 42 über das Gelenk 16 hinweg stehen verschiedene konstruktive Möglichkeiten zur Verfügung. Bei der in der Zeichnung gezeigten Ausführung ist das mit 44 bezeichnete Oberteil des Herds mit der Kochplatte 42 abnehmbar und wendbar. Das Gelenk 16 ist nach Art eines Scharniers ausgebildet, wobei das eine Scharnierteil wärmeleitend mit der Platte 26 verbunden ist, während das andere Scharnierteil über eine Steckkupplung 46 mit einem gut wärmeleitenden Teil 48 im Ober teil 44, welches mit der Heizplatte 42 in Verbindung steht, lösbar gekuppelt werden kann. Sowohl das Scharniergelenk bei 16 als auch die Steckkupplung 46 sind dabei so ausgeführt, daß ein guter Wärmeübergang zwischen den aneinander anliegenden wärmeleitenden Teilen besteht. Bei der wärmeleitenden Einlage 48 im Oberteil 44 kann es sich z.B. um eine Platte oder Drähte aus Metall, z.B. Kupfer, handeln. Die wärmeleitenden Teile zwischen der Platte 26 und der Heizplatte 42 sind an allen Stellen beidseitig wärmeisoliert.

Auch die Heizplatte 42 ist in der Stellung nach Fig. 5 auf der Unterseite wärmeisoliert. Diese Isolierschicht ist in Fig. 3 mit 50 bezeichnet. Sie bildet in dieser Lage die Decke eines inneren Hohlraums 52 im Herd, der ringsum wärmeisoliert und durch eine Klappe 54 zugänglich ist, die z.B. auf der der Kollektorplatte 14 gegenüberliegenden Seite angeordnet sein kann. In der gewendeten Stellung des Oberteils 44 bildet die Heizplatte 42 die Decke des inneren Hohlraums 52, während sich die Isolierschicht 50 auf der Oberseite befindet. In dieser Stellung kann der innere Hohlraum 52 als Brat-oder Warmhalteraum dienen.

Es versteht sich, daß der gezeigte und beschrieben Herd zahlreiche Ausführungsvarianten gestattet. Anstelle des Scharniergelenks bei 16 könnte z.B. bei einstückiger wärmeleitender Verbindung zwischen der Kollektorplatte 14 und der Heizplatte 42 ein biegsamer Übergangsbereich vorhanden sein.

Weiterhin läßt sich die Erfindung auch mit Herden verwirklichen, die eine andere als die gezeigte quaderförmige Gestalt haben. Schließlich könnten noch auf einer oder zwei weiteren Seiten von der Heizplatte 42 wärmeleitend mit dieser verbundene Kollektorplatten 14 angebracht sein.

Hinsichtlich des Sonnenstrahlen-Kollektors können Abwandlungen des gezeigten Ausführungsbeispiels darin bestehen, daß in den Bereichen zwischen den Linsen weitere Licht absorbierende oder umlenkende Elemente angeordnet werden, z.B. Fotozellen zur Direktumwandlung von Licht in elektrischen Strom, Spiegel, Prismen oder z.B. auch eine weitere metallische Absorberplatte, deren Wärme einem anderen Wärmeverbraucher zugeleitet werden könnte. Selbstverständlich ist die Erfindung auch nicht auf die gezeigte Form der Linsenplatte beschränkt. Es können alle praktisch infrage kommenden Linsen verwendet werden, und die Linsenplatte insgesamt könnte auch gekrümmt statt eben sein.

Weiterhin sieht ein alternatives Ausführungsbeispiel vor, daß im Kollektor und/oder im Herd außer wärmedämmenden auch wärmespeichernde Materialien eingesetzt werden, wenn das zusätzliche Gewicht im Hinblick auf Vorteile infolge der Wärmespeicherung vertretbar ist.

Die vom Kollektor gesammelte Wärmeenergie braucht auch nicht ausschließlich zum Kochen und Braten benutzt zu werden. In den Zwischenzeiten ließe der Kollektor statt an den Herd auch an andere Wärmeverbraucher anschließen, um z.B. Brauch-oder Badewasser zu erwärmen.

## Ansprüche

1. Mit Solarenergie betriebener Herd mit wenigstens einer Kochplatte und einem Sonnenstrahlen-Kollektor, **dadurch gekennzeichnet,** daß der Kollektor (14) eine metallisch wärmeleitend mit der Kochplatte (42) verbundene, um wenigstens eine im wesentlichen horizontale Achse (16) schwenkbare Platte (26) aus wärmeleitendem Material aufweist, die mit Ausnahme einzelner Stellen (bei 36), wo sie mit durch Sammellinsen (12) konzentrierten Sonnenstrahlen beaufschlagbar ist, beidseitig isoliert ist.

2. Herd nach Anspruch 1, **dadurch gekennzeichnet,** daß der Raum zwischen den Linsen (12) und der wärmeleitenden Platte (26) dicht abgeschlossen ist.

3. Herd nach Anspruch 1 oder 2, **dadurch gekennzeichnet,** daß der Raum zwischen den Linsen (12) und der wärmeleitenden Platte (26) mit Ausnahme konischer Freiräume unter den Linsen (12) mit wärmeisolierendem Material ausgefüllt ist.

4. Herd nach einem der vorhergehenden Ansprüche, **dadurch gekennzeichnet,** daß die wärmeleitende Platte (26) durch eine gegen sein Gehäuse oder den Boden anzustellende Stütze (2o) in verschiedenen Schräglagen feststellbar ist.

5. Herd nach einem der vorhergehenden Ansprüche, **dadurch gekennzeichnet,** daß die Kochplatte (42) und die wärmeleitende Platte (26) über einen elastischen Materialbereich einstückig miteinander verbunden sind.

6. Herd nach Anspruch 5 , **dadurch gekennzeichnet,** daß der elastische Materialbereich aus Drahtlitzen besteht.

7. Herd nach einem der Ansprüche 1 bis 4, **dadurch gekennzeichnet,** daß die Kochplatte (42) und die wärmeleitende Platte (26) durch gleitend aneinander anliegende Gelenkteile wärmeleitend miteinander verbunden sind.

8. Herd nach einem der Ansprüche 1 bis 7, **dadurch gekennzeichnet,** daß im Bereich zwischen den Sammellinsen (12) weitere Licht absorbierende oder umlenkende Elemente angeordnet sind.

9. Herd nach einem der vorhergehenden Ansprüche, **dadurch gekennzeichnet,** daß sein Gehäuse einen durch eine verschließbare Öffnung zugänglichen, isolierten, inneren Hohlraum (52) hat, welcher ebenfalls durch die wärmeleitende Platte (26) beheizbar ist.

1o. Herd nach Anspruch 9, **dadurch gekennzeichnet,** daß die Kochplatte (42) einseitig isoliert und wendbar ist, wobei sie je nach Stellung mit der nicht isolierten oder der isolierten Seite den inneren Hohlraum (52) begrenzt.

Fig.1

Fig.2

Fig.3

Fig.4

Fig.5

Fig.6